# EUROPÄISCHE PATENTSCHRIFT

(11) **EP 3 959 028 B1**
(45) Veröffentlichungstag und Bekanntmachung des Hinweises auf die Patenterteilung: **11.09.2024**
(21) Anmeldenummer: 20722228.2
(22) Anmeldetag: 15.04.2020
(51) Int. Cl.: B23F 21/00, B23F 19/10, B23F 5/16, B23F 19/00, B23F 17/00, B23Q 39/04

(54) **VERFAHREN UND VORRICHTUNG ZUM HERSTELLEN VON VERZAHNTEN WERKSTÜCKEN, INSBESONDERE SCHIEBEMUFFEN, SOWIE WERKZEUG DAFÜR**
METHOD AND APPARATUS FOR PRODUCING TOOTHED WORKPIECES, IN PARTICULAR SLIDING COLLARS, AND TOOL THEREFOR
PROCÉDÉ ET DISPOSITIF POUR LA FABRICATION DE PIÈCES DENTÉES, EN PARTICULIER DE MANCHONS COULISSANTS, AINSI QU'OUTIL CORRESPONDANT

(30) Priorität: 23.04.2019 DE 102019110481
(43) Veröffentlichungstag der Anmeldung: 02.03.2022
(73) Patentinhaber: Profilator GmbH & Co. KG, 42329 Wuppertal (DE)
(72) Erfinder: PROCK, Erich, 93055 Regensburg (DE)
(74) Vertreter: Grundmann, Dirk
(86) Internationale Anmeldenummer: PCT/EP2020/060566
(87) Internationale Veröffentlichungsnummer: WO 2020/216657

(56) Entgegenhaltungen:
- EP-A1- 0 625 399
- EP-A1- 1 834 719
- WO-A1-2019/011871
- DE-A1- 102011 050 499
- DE-A1- 102015 104 242
- DE-A1- 19 933 137
- US-A1- 2017 072 485

## Beschreibung

### Gebiet der Technik

Die Erfindung betrifft ein Verfahren gemäß dem Oberbegriff des Anspruchs 1 und eine Vorrichtung gemäß dem Oberbegriff des Anspruchs 2 zur Komplettbearbeitung von Zahnrädern und insbesondere innenverzahnten Zahnrädern und bevorzugt Schiebemuffen. Die Erfindung betrifft auch ein Werkzeug zur spanenden Bearbeitung verzahnter Werkräder gemäß dem Oberbegriff des Anspruchs 3. Ein derartiges Verfahren, eine derartige Vorrichtung und ein derartiges Werkzeug sind aus dem Dokument DE 10 2015 104242 A1 bekannt. Ein unverzahntes Rohteil wird von einem Greifer gegriffen. Das Rohteil erhält mittels eines Wälzschälwerkzeugs durch ein Wälzschälverfahren eine Innenverzahnung. Die Stirnseiten der derart erzeugten Zähne werden mit Abdachwerkzeugen abgedacht. In die Flanken der Zähne des Werkrades werden Hinterlegungen und Rastnuten eingearbeitet.

### Stand der Technik

Aus der DE 10 2011 050 499 A1 ist eine Vorrichtung bekannt, mit der mittels verschiedener Werkzeugspindeln und davon getragenen, Schneidkanten aufweisenden, Werkzeugen Abdachungen und Hinterlegungen in ein innenverzahntes Werkrad eingebracht werden können.

Die DE 10 2016 113 512 A1 beschreibt eine Vorrichtung und ein Verfahren zum Fertigen von innenverzahnten Zahnrädern mittels eines Wälzschälwerkzeuges.

Aus der DE 100 02 188 A1 ist ein Verfahren vorbekannt, mit dem in eine Schiebemuffe Hinterlegungen eingebracht werden können.

Aus der US 4,726,720 ist eine Vorrichtung und ein Verfahren bekannt, bei dem mittels drehangetriebener Werkzeugspindeln, die jeweils ein AbdachWerkzeug tragen, linke und rechte Abdachungen an den Stirnseiten eines Zahnes gefertigt werden können.

Aus der DE 10 2015 104 242 A1 ist eine Vorrichtung und ein Verfahren bekannt, womit Verzahnungen, Hinterlegungen oder Rastnuten gefertigt werden können.

### Zusammenfassung der Erfindung

Der Erfindung liegt die Aufgabe zugrunde, eine konstruktiv einfache Vorrichtung anzugeben, mit der ein kostengünstiges Verfahren zum Komplettbearbeiten von Schiebemuffen durchgeführt werden kann.

Gelöst wird die Aufgabe durch die in den unabhängigen Ansprüchen 1 bis 3 angegebene Erfindung. Die Unteransprüche stellen nicht nur vorteilhafte Weiterbildungen der in den nebengeordneten Ansprüchen angegebenen Erfindung, sondern auch eigenständige Lösungen der Aufgabe dar.

Eine erfindungsgemäße Vorrichtung besteht aus zumindest einer ersten Maschineneinheit. Die zumindest eine Maschineneinheit weist eine erste Werkstückspindel auf, die mit einem Wälzschälwerkzeug bestückt ist, wie es beispielsweise aus der DE 10 2016 113 512 A1 oder der DE 10 2015 104 242 A1 bekannt ist. Mit diesem Wälzschälwerkzeug wird in einem ersten Bearbeitungsschritt ein Rohling, der ein unverzahntes Werkrad ist, mit einer Verzahnung, insbesondere Innenverzahnung, versehen. Erfindungsgemäß besitzt die Maschineneinheit eine zweite drehangetriebene Werkzeugspindel, die ein Kombinationswerkzeug trägt. Das Kombinationswerkzeug besitzt ein oder mehrere Abdachschneidkanten, Hinterlegungsschneidkanten und eine Rastnutenschneidkanten-Anordnung. Mit diesem zweiten Werkzeug können in beliebiger Reihenfolge nacheinander linke Abdachungen, rechte Abdachungen, Hinterlegungen und Rastnuten in die Zähne des zuvor verzahnten Werkrades eingearbeitet werden. Anders als bei einem Verfahren, wie es die US 4,726,720 beschreibt, werden die an den Stirnseiten der Zähne vorgesehenen Abdachungen nicht gleichzeitig durch zwei im Synchronlauf angetriebene Schneidmesser erzeugt. Die Abdachungen werden vielmehr zeitlich nacheinander erzeugt. Dies erfolgt aber mit derselben zweiten Werkzeugspindel und dem darauf aufgespannten Kombinationswerkzeug, welches hierzu zwei Abdachschneidkanten besitzt. Zum Fertigen der linken Abdachungen wird das zweite Werkzeug in eine erste Position gebracht, in der die zumindest eine Abdachschneidkante, bevorzugt alle Abdachschneidkanten, insbesondere beide Abdachschneidkanten die linken Abdachungen fertigen. Der Schnitt kann dabei in mehreren aufeinanderfolgenden Schritten durchgeführt werden, wobei der Schnitt jeweils aus der Zahnflanke heraus ins Dach geführt wird. In einem nachfolgenden Arbeitsgang, bei dem das zweite Werkzeug in eine andere Position gebracht wird, werden die rechten Abdachungen gefertigt. Hierbei erfolgt der Schnitt in mehreren aufeinanderfolgenden Schritten bevorzugt vom Dach in die Zahnflanke. Während sich bei der Fertigung der linken Abdachungen ein dachseitiger Grat ausbildet, der beim Fertigen der rechten Abdachungen wieder abgetragen wird, bildet sich bei der Fertigung der rechten Abdachungen ein zahnflankenseitiger Grat aus, der in einem späteren Schlichtschritt wieder entfernt werden kann. Die Abdachschneidkanten sind bevorzugt am freien Ende des zweiten Werkzeuges angeordnet. In einer axialen Beabstandung zu den Abdachschneidkanten trägt das Werkzeug Hinterlegungsschneidkanten, die bevorzugt von Zähnen eines Schneidrades ausgebildet werden, wie es grundsätzlich aus der DE 100 02 188 A1 vorbekannt ist. Die Hinterlegungsschneidkante beziehungsweise das mehrere Hinterlegungsschneidkanten ausbildende Schneidrad liegt in axialer Anordnung zwischen der Rastnutschneidkanten-Anordnung und den beiden Abdachschneidkanten. Die Rastnutenschneidkanten-Anordnung und die Abdachschneidkanten können von Wendeschneidplatten ausgebildet sein. In einer Weiterbildung der Erfindung ist vorgesehen, dass zu jeder der beiden Werkzeugspindeln eine Werkstückspindel korrespondiert. Die Werkstückspindel besitzt ein Futter zur Aufnahme eines Werkrades. In einer ersten Werkstückspindel wird der unverzahnte Rohling gespannt, um mit dem Wälzschälwerkzeug verzahnt zu werden. Es kann eine Übergabeeinrichtung, insbesondere in Form eines Umsetzers vorgesehen sein, mit der das verzahnte Werkstück gegriffen werden kann, um der zweiten Werkstückspindel zugeführt zu werden. In einer einzigen Aufspannung des Werkrades in der zweiten Werkstückspindel werden die Abdachungen, die Hinterlegungen und die Rastnuten in nacheinander erfolgenden Bearbeitungsschritten mit einem einzigen Kombinationswerkzeug, das von der zweiten Werkzeugspindel gehalten ist, gefertigt. Bei der Verzahnung im Wälzschälverfahren steht das Wälzschälwerkzeug in einem Achskreuzwinkel zum drehangetriebenen Werkrad. Die beiden Achsen von Werkstückspindel und Werkzeugspindel sind windschief zueinander. Zum Abdachen wird die zweite Werkzeugspindel in einem Achskreuzwinkel zum Werkrad gebracht. Dabei ist es nicht erforderlich, dass die beiden Achsen windschief zueinander stehen. Die Werkzeugachse und die Werkstückachse können in einer gemeinsamen Ebene liegen. In dieser Ebene wird die Werkzeugachse gegenüber der Werkstückachse verschwenkt, um nach dem Fertigen der ersten Abdachungen, beispielsweise der linken Abdachung, rechte Abdachungen zu erzeugen. Dies kann in derselben Drehrichtung der Werkzeugspindel erfolgen. Die Fertigung der Hinterlegungen und der Rastnuten erfolgt mit einer parallel zur Werkstückspindelachse ausgerichteten Werkzeugspindelachse. Bezogen auf ein rechtwinkliges X-Y-Z-Koordinatensystem verlaufen die Werkstückspindelachsen in einer Z-Richtung. Die Werkzeugspindeln können relativ gegenüber der Werkstückspindel oder den Werkstückspindeln in der X-Y-Ebene und in der Z-Richtung verlagert werden. Zusätzlich besitzt die Werkzeugspindel-Halterung eine Schwenkachse, die sich quer zur Z-Richtung erstreckt, um welche die Werkzeugspindel geschwenkt werden kann, um das Werkzeug in die Neigungslage beziehungsweise windschiefe Lage zum Werkstück zu bringen. Es ist insbesondere vorgesehen, dass für jede Paarung von Werkstückspindel und Werkzeugspindel nur eine Schwenkachse vorgesehen ist. In einer ersten Variante der Erfindung besitzt die Vorrichtung eine einzige Maschineneinheit, in der die Komplettbearbeitung stattfindet. Um die Schiebemuffe auf beiden sich gegenüberliegenden Stirnseiten mit Abdachungen zu versehen und um erste und zweite Hinterlegungen zu erzeugen, wird das Werkrad nach dem Abdachen der Zahnstirnseiten einer Seite, dem Erzeugen der Hinterlegungen und der Rastnuten mittels der Übergabeeinrichtung um 180° gewendet und erneut in die zweite Werkstückspindel eingespannt. In dieser Aufspannstellung werden dann die zweiten Abdachungen auf der gegenüberliegenden Seite und zweite Hinterlegungen gefertigt. In einer bevorzugten Variante der Erfindung weist die Vorrichtung jedoch eine erste Maschineneinheit auf, mit der beispielsweise die vorderen Abdachungen, vorderen Hinterlegungen und die Rastnuten gefertigt werden. Mit einem Wälzschälwerkzeug der ersten Maschineneinheit erfolgt die Fertigung einer Grobverzahnung. Eine zweite Maschineneinheit, die bevorzugt baugleich oder nahezu baugleich mit der ersten Maschineneinheit ist, können beispielsweise die rückwärtigen Abdachungen und die rückwärtigen Hinterlegungen erzeugt werden. Es ist insbesondere vorgesehen, dass die Rastnuten nur mit der ersten Maschineneinheit gefertigt werden. Mit dem Wälzschälwerkzeug der zweiten Maschineneinheit kann eine Schlichtbearbeitung durchgeführt werden, bei der insbesondere ein beim Abdachen entstandener Grat entfernt wird. Bei der Schlichtbearbeitung wird das grobverzahnte Werkrad fein bearbeitet. Es ist aber auch möglich, mit jeder der beiden Maschineneinheiten Rastnuten zu fertigen oder mit nur einer der Maschineneinheiten Hinterlegungen zu erzeugen. Die beiden Maschineneinheiten können von einer gemeinsamen Steuerung gesteuert werden. Sie sind insbesondere spiegelbildlich aufgebaut und werden von einer gemeinsamen Fördereinrichtung mit Werkrädern versorgt. Hierzu besitzt die Vorrichtung und insbesondere jede Maschineneinheit einen Greifer, der das Werkrad von einem Förderband greifen kann. Der Greifer kann das unverzahnte Werkrad in die erste Werkstückspindel der ersten Maschineneinheit einsetzen, wo das Werkrad grob verzahnt wird. Mit der Übergabeeinrichtung kann das grob verzahnte Werkrad dann zur zweiten Werkstückspindel gebracht werden. Während dieser Zeit kann der Greifer ein weiteres Werkrad vom Förderband nehmen, um es in das Futter der ersten Werkstückspindel einzusetzen. Der Umsetzer setzt das grob verzahnte Werkrad in das Futter der zweiten Werkstückspindel, wo es vom Kombinationswerkzeug mit vorderen Abdachungen, vorderen Hinterlegungen und Rastnuten versehen wird. Das derart bearbeitete Werkrad wird dann mittels des Umsetzers und/oder des Greifers um 180° gewendet auf das Förderband abgelegt. Es wird weitertransportiert zu einer zweiten Maschineneinheit, die ebenfalls einen Greifer aufweist. Dieser Greifer greift das vorgefertigte Werkrad, um es beispielsweise zuerst in die dortige zweite Werkstückspindel einzusetzen, wo mit einem weiteren Kombinationswerkzeug die rückwärtigen Abdachungen und die rückwärtigen Hinterlegungen gefertigt werden. Ein Umsetzer oder Greifer kann dann das Werkrad in die dortige erste Werkstückspindel einsetzen, wo es mittels eines Wälzschälwerkzeuges feinbearbeitet wird. Bei der Feinbearbeitung findet eine Entgratung statt, bei der Grate entfernt werden, die beim Fertigen der Hinterlegungen, der Abdachungen und der Rastnuten erzeugt worden sind. Die Werkräder sind bevorzugt Hohlräder, die eine Innenverzahnung erhalten. Es können aber auch Außenverzahnungen gefertigt werden.

### Kurze Beschreibung der Zeichnungen

Ein Ausführungsbeispiel der Erfindung wird nachfolgend anhand beigefügter Zeichnungen erläutert. Es zeigen:
- Fig. 1: in einer schematischen Darstellung eine Seitenansicht auf eine zwei im Wesentlichen baugleiche Maschineneinheiten aufweisende erfindungsgemäße Vorrichtung,
- Fig. 2: schematisch eine Draufsicht auf die in Figur 1 dargestellte Vorrichtung,
- Fig. 3: vergrößert ein Wälzschälwerkzeug 4 beim Innenverzahnen eines in ein Futter einer ersten Werkstückspindel 5 eingespannten Werkrades 6,
- Fig. 4: vergrößert ein Kombinationswerkzeug 14 mit Abdachwerkzeugen 25, 26, Hinterlegungswerkzeugen 28 und RastnutenWerkzeugen 29,
- Fig. 5: eine Draufsicht auf das in der Figur 4 dargestellte Kombinationswerkzeug 14,
- Fig. 6: einen dreidimensionalen Ausschnitt eines fertig bearbeiteten Werkrades 6 in Form einer Abdachungen A, Rastnuten R und Hinterlegungen H aufweisenden Schiebemuffe,
- Fig. 7: das Kombinationswerkzeug 14 im Einsatz zur Erzeugung linker Abdachungen,
- Fig. 8: das Kombinationswerkzeug 14 im Einsatz zur Erzeugung rechter Abdachungen,
- Fig. 9: das Kombinationswerkzeug 14 im Einsatz zur Erzeugung von Hinterlegungen,
- Fig. 10: das Kombinationswerkzeug 14 im Einsatz zur Erzeugung von Rastnuten,
- Fig. 11: vergrößert die in der Figur 1 links dargestellte Maschineneinheit,
- Fig. 12: in einer Darstellung gemäß Figur 4 ein zweites Ausführungsbeispiel eines Kombinationswerkzeuges 24,
- Fig. 13: die Draufsicht auf das in Figur 12 dargestellte Kombinationswerkzeug und
- Fig. 14: eine Darstellung gemäß Figur 9 beim Erzeugen von Hinterlegungen mit dem Kombinationswerkzeug des zweiten Ausführungsbeispiels.

### Beschreibung der Ausführungsformen

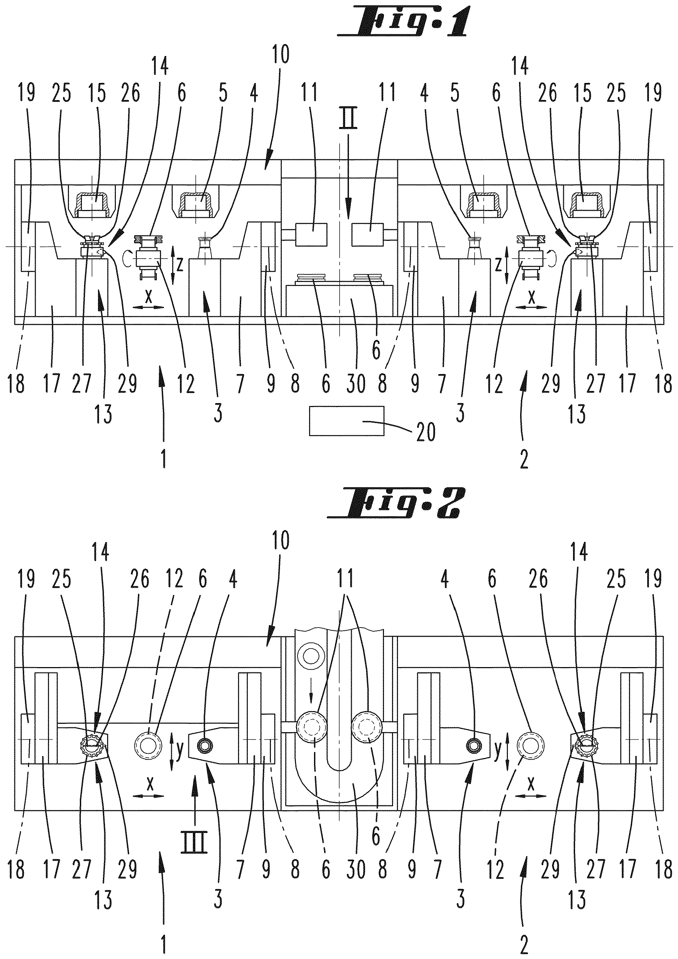

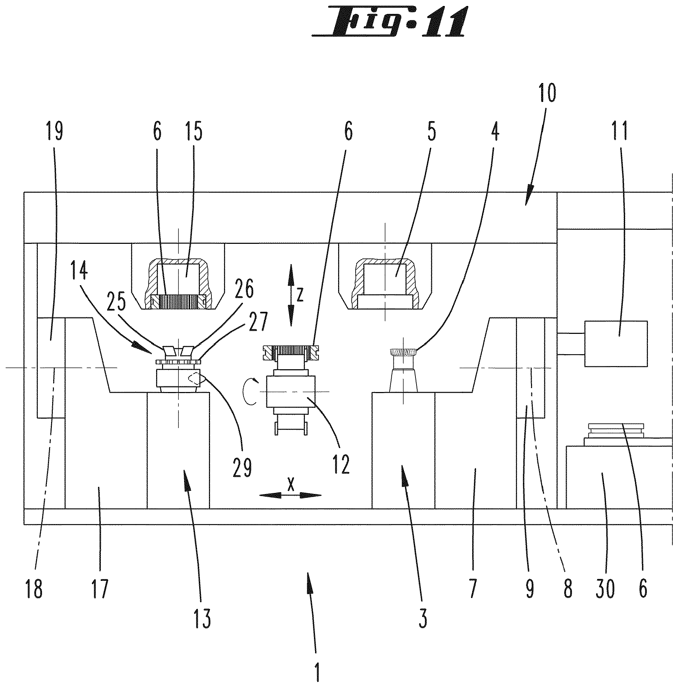

Die Figuren 1 und 2 zeigen ein Maschinengestell mit zwei im Wesentlichen baugleichen Maschineneinheiten 1, 2. Die Maschineneinheit 1 ist in der Figur 11 vergrößert dargestellt. Sie besitzt einen Greifer 11, der in der Lage ist, ein von einer Fördereinrichtung 30, beispielsweise einem Förderband, transportiertes Werkrad 6 zu greifen. Bei dem Werkrad 6, das vom Greifer 11 gegriffen wird, handelt es sich um einen unverzahnten Rohling, beispielsweise um eine vorbereitete Muffe. Diese wird vom Greifer 11 zu einer ersten Werkstückspindel 5 transportiert, die ein Futter aufweist, in dem das Werkrad 6 gespannt wird.

Die Bezugsziffer 4 zeigt ein Wälzschälwerkzeug, welches von einer mit der Bezugsziffer 3 bezeichneten ersten Werkzeugspindel drehangetrieben werden kann. Die erste Werkzeugspindel 3 sitzt an einem Spindelträger 7, der um eine Schwenkachse 8 verschwenkt werden kann. Bezeichnet man die Achsrichtung der ersten Werkstückspindel 5 mit Z, so erstreckt sich die Schwenkachse 8 in einer Richtung quer zur Z-Achse, also in einer X-Y-Ebene.

Um in ein in das Futter der ersten Werkstückspindel 5 eingespanntes Werkrad eine Innenverzahnung einzubringen, muss die Drehachse der ersten Werkzeugspindel 3 in eine Neigungslage gebracht werden, wie es beispielsweise in der DE 10 2016 113 512 A1, EP 2 520 290 B1 oder EP 2 520 391 B1 beschrieben wird.

Beim Ausführungsbeispiel wird mit dem Wälzschälwerkzeug 4 der ersten Maschineneinheit 1 eine Innenverzahnung, insbesondere eine Grobverzahnung erzeugt.

Nach dem Verzahnen des Werkrades 6 wird das Werkrad 6 von einer Übergabeeinrichtung 12 gegriffen und an eine zweite Werkstückspindel 15 gebracht. Es wird in das Futter der zweiten Werkstückspindel eingespannt. Währenddessen kann der Greifer 11 ein weiteres Werkrad 6 von der Fördereinrichtung 30 nehmen, um es dem Futter der ersten Werkstückspindel 5 zuzuführen. Die Werkstückspindel 5 und das Wälzschälwerkzeug 4 werden bei der Wälzschälverzahnung jeweils von Einzelantrieben in einem Synchronlauf drehangetrieben.

Die zweite Werkstückspindel 15 wirkt mit einem Kombinationswerkzeug 14 zusammen. Das Kombinationswerkzeug 14 wird in Gleichlauf zum Futter der zweiten Werkstückspindel 15 eingespannten Werkrad 6 drehangetrieben. Das Kombinationswerkzeug 14 besitzt an seinem freien Ende zwei im Wesentlichen sich in einer gemeinsamen Ebene erstreckende Wendeschneidplatten 25, 26. Die Wendeschneidplatte 25 besitzt eine erste Abdachschneidkante 25' zum Erzeugen linker oder rechter Abdachungen. Die Wendeschneidplatte 26 besitzt eine zweite Abdachschneidkante 26' ebenfalls zum Erzeugen linker oder rechter Abdachungen.

Axial versetzt zu den beiden Wendeschneidplatten 25, 26 trägt das Kombinationswerkzeug 14 ein Hinterlegungswerkzeug 27 in Form eines Schneidrings. Der Schneidring besitzt eine Vielzahl von gleichmäßig beabstandeten Schneidzähnen 28, die jeweils Schneidkanten 28' ausbilden.

Das Hinterlegungswerkzeug 27 befindet sich zwischen dem von den Wendeschneidplatten 25, 26 ausgebildeten Abdachwerkzeug und einem Rastnutenwerkzeug 29. Das Rastnutenwerkzeug 29 besitzt zwei sich schräg zur Drehachse 21 erstreckende Schneidkanten 29', 29", deren Verlängerung sich in einem gedachten Punkt schneidet, wobei dieser Punkt einen größeren Radialabstand zur Drehachse 21 aufweist, als der Zahnkopf des Schneidzahnes 28 des Hinterlegungswerkzeuges 27. Beim Ausführungsbeispiel gehen die Schneidkanten 29', 29" unter Ausbildung einer Verrundung ineinander über, wobei auch hier der Scheitelpunkt der Verrundung einen größeren Radialabstand zur Drehachse 21 aufweist, als die übrigen Schneidkanten 25', 26', 28'.

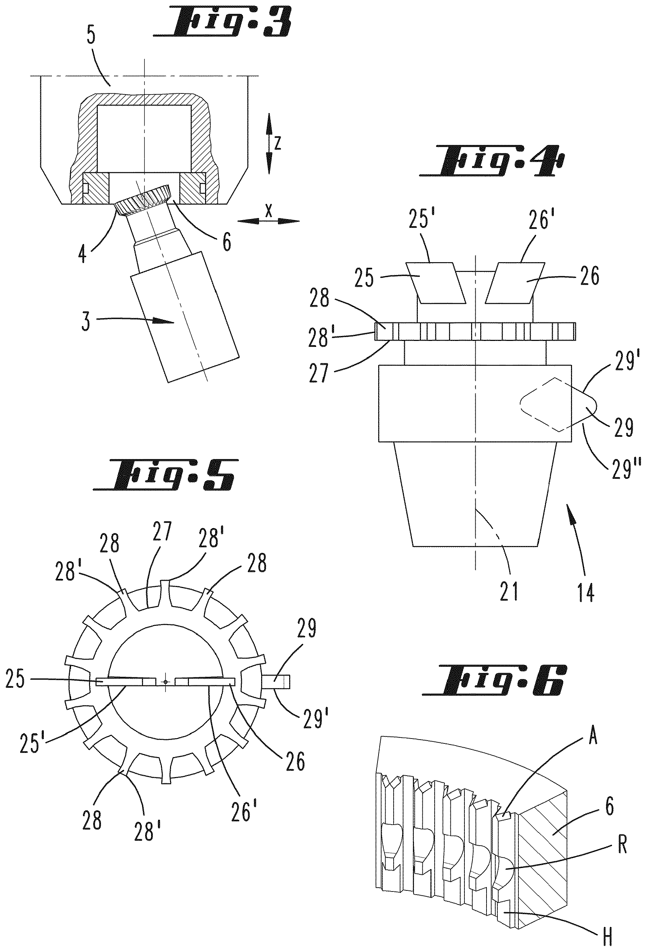

Die Figur 3 verdeutlicht die Relativposition von erster Werkzeugspindel 3 und erster Werkstückspindel 5 beim Erzeugen der Verzahnung mittels des Wälzschälwerkzeuges 4. Die Werkzeugspindel 3 ist um eine sich in der X-Achse erstreckende Schwenkachse in eine windschiefe Lage zur Drehachse der ersten Werkstückspindel 5 geschwenkt.

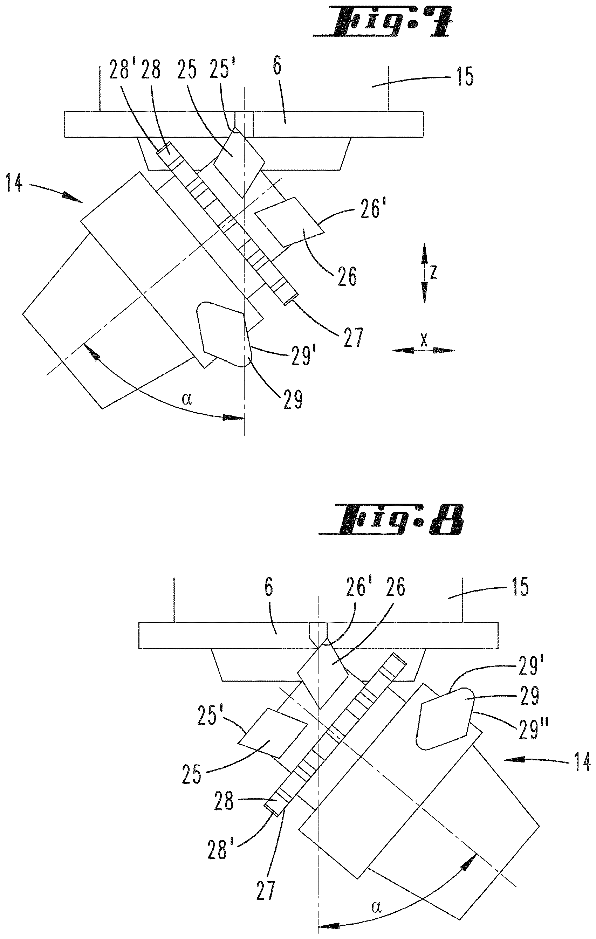

Die Figur 7 verdeutlicht eine Schwenkstellung des von der zweiten Werkstückspindel 15 getragenen Kombinationswerkzeuges 14 um einen ersten Winkel α. In dieser Position werden mit der linken Schneidkante 25' erste Abdachungen in Stirnflächen der Zähnen des Werkrades eingearbeitet. Nachdem die linken Abdachungen gefertigt sind, wird die zweite Werkzeugspindel 13 in die in Figur 8 dargestellte Schwenkstellung gebracht. In den beiden in den Figuren 7 und 8 dargestellten Schwenkstellungen können die Achsen von Werkstückspindel 15 und Werkzeugspindel 13 in einer gemeinsamen Ebene liegen. In der in Figur 8 dargestellten Schwenkstellung der zweiten Werkzeugspindel gegenüber der zweiten Werkstückspindel werden rechte Abdachungen gefertigt. Dies kann in derselben Drehrichtung erfolgen.

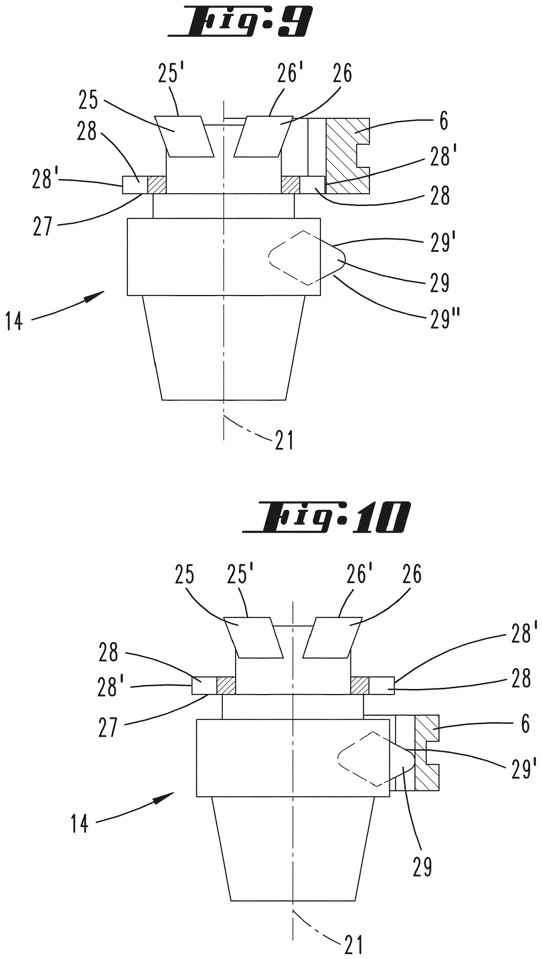

In einem darauf folgenden Bearbeitungsschritt, der in der Figur 9 gezeigt ist, wird die Achse der Werkzeugspindel 13 in eine Parallellage zur Achse der Werkstückspindel 15 gebracht. Mit dem Hinterlegungswerkzeug 27 werden jetzt die Hinterlegungen eingearbeitet, wie es grundsätzlich aus dem eingangs genannten Stand der Technik vorbekannt ist.

In einem weiteren Bearbeitungsschritt, der in der Figur 10 dargestellt ist, werden mit dem Rastkanten-Werkzeug 29 Rastkanten in die Zahnflanken des Werkrades 6 eingearbeitet.

Die aufeinander folgenden Bearbeitungsschritte werden erfindungsgemäß von einer Steuereinrichtung 20 gesteuert. Die Steuereinrichtung 20 ist in der Lage, Einzeldrehantriebe der Werkstückspindeln 5, 15 der Werkzeugspindeln 3, 13, eine Drehverlagerung um die Schwenkachse 18, eine Verlagerung in den X-, Y-, Z-Richtungen der Werkzeugspindeln 3, 13 und Werkstückspindeln 5, 15, die Bewegung eines Greifers 11 und/oder einer Übergabeeinrichtung 12 zu steuern. Die aus den beiden Maschineneinheiten 22, 23 bestehende Vorrichtung besitzt vorzugsweise eine gemeinsame Steuerung 20.

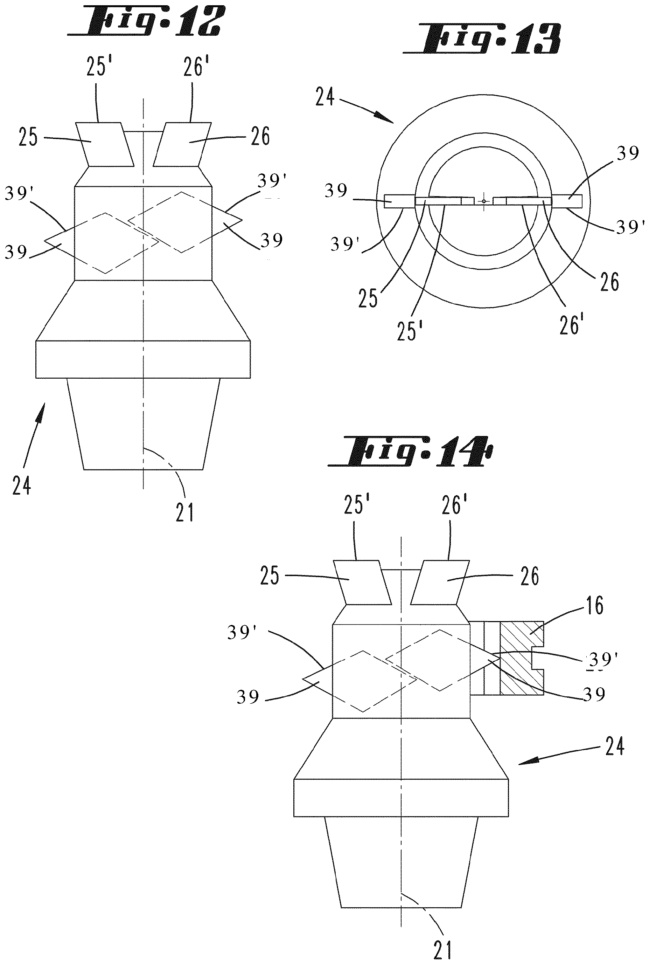

In der in der Figur 1 links dargestellten ersten Maschineneinheit 1 kann gemäß einem bevorzugten Verfahren zunächst mit dem Wälzschälwerkzeug 4 eine Grobverzahnung in das Werkrad 6 eingebracht werden. Sodann werden mit dem Kombinationswerkzeug 14 zunächst die Abdachungen auf der vorderen Seite des Werkrades 6, vordere Hinterlegungen und Rastnuten erzeugt. Mit einer Übergabeeinrichtung 12 wird das so vorgefertigte Werkrad 6 in einer um 180° gewendeten Stellung wieder auf das Förderband 30 gesetzt, wo es zur zweiten Maschineneinheit 2 weiter transportiert wird. Ein Greifer 11 der zweiten Maschineneinheit 2 kann das Werkstück 6 greifen, um es dem Futter der dortigen zweiten Werkstückspindel 15 zuzuführen. Mit dem dortigen Kombinationswerkzeug 24, das beispielsweise die in der Figur 12 dargestellte Gestalt besitzen kann, brauchen jetzt nur die rückwärtigen Abdachungen und zweite Hinterlegungen gefertigt zu werden. Als Beispiel sind hier die Hinterlegungswerkzeuge 39 als Wendeschneidplatten mit Hinterlegungsschneidkante (39') dargestellt. Das Hinterlegungswerkzeug kann aber auch hier als Schneidrad ausgebildet sein.

Nachdem das Werkrad 6 mit vorderen und rückwärtigen Abdachungen A, vorderen und rückwärtigen Hinterlegungen H und Rastnuten R ausgestattet ist, erfolgt eine Schlichtbearbeitung mit dem Wälzschälwerkzeug 4. Hierzu wird das Werkrad 6 in das Futter der ersten Werkstückspindel 5 eingespannt und mit dem Wälzschälwerkzeug 4 bearbeitet.

Die erfindungsgemäße Vorrichtung ist in der Lage, mit geringem Aufwand und unter Einsatz eines Roboters, der die Werkräder den einzelnen Werkstückspindeln 5,15 zuführt, mit geringem baulichen Aufwand eine Schiebemuffe komplett zu fertigen.

Mit dem erfindungsgemäßen Verfahren können nach einer Grobverzahnung des bevorzugt hohlen Werkrades nacheinander linke Abdachungen, rechte Abdachungen, Hinterlegungen und Rastnuten gefertigt werden. Dabei können die Abdachungen, Hinterlegungen und Rastnuten in dieser Reihenfolge gefertigt werden. Sie können aber auch in beliebiger Reihenfolge gefertigt werden. In einem nachfolgenden Schlichtverfahren werden Grate, die beim Abdachen, Hinterlegen oder der Rastnutenfertigung erzeugt werden, spanend abgetragen.

### Liste der Bezugszeichen

| | | | |
|---|---|---|---|
| 1 | erste Maschineneinheit | 25' | Schneide, Abdachschneidkante |
| 2 | zweite Maschineneinheit | 26 | rechte Wendeschneidplatte |
| 3 | erste Werkzeugspindel | 26' | Scheide, Abdachschneidkante |
| 4 | Wälzschälwerkzeug | 27 | Hinterlegungswerkzeug |
| 5 | erste Werkstückspindel | 28 | Schneidzahn |
| 6 | Werkstück/Schiebemutter, Werkrad | 28' | Schneide, Hinterlegungs-schneidkante |
| 7 | Spindelträger | 29 | Rastmutterwerkzeug |
| 8 | Schwenkachse | 29' | Schneide, Rastnutschneidkan-ten-Anordnung |
| 9 | Träger | | |
| 10 | Maschinenbett | 29" | Rastnutschneidkanten-Anordnung |
| 11 | Greifer | | |
| 12 | Übergabeeinrichtung | 30 | Förderband |
| 13 | zweite Werkzeugspindel | 39 | Hinterlegunswerkzeug |
| 14 | Kombinationswerkzeug | 39' | Hinterlegungsschneidkante |
| 15 | zweite Werkstückspindel | | |
| 16 | Werkstück, Werkrad | A | Abdachung |
| 17 | Spindelträger | H | Hinterlegung |
| 18 | Schwenkachse | R | Rastnut |
| 19 | Träger | | |
| 20 | Steuereinrichtung | | |
| 21 | Drehachse | α | Winkel |
| 24 | Kombinationswerkzeug | | |
| 25 | linke Wendeschneidplatte, | | |

## Patentansprüche

1. Verfahren zum Bearbeiten von Werkrädern (6,16) mit folgenden Schritten:
- Greifen eines Werkrades (6) und Aufspannen des Werkrades (6) an einer ersten Werkstückspindel (5);
- Verzahnen des unverzahnten Werkrades (6) mittels eines von einer ersten Werkzeugspindel (3) drehangetriebenen Wälzschälwerkzeugs (4) im Wälzschälverfahren; und
- Erzeugen von Abdachungen an den Stirnseiten der Zähne des Werkrades (6) sowie Hinterlegungen und Rastnuten an den Zahnflanken der Zähne des Werkrades (6) mit einem von einer zweiten Werkzeugspindel (13) drehangetriebenen Werkzeug (14),
**dadurch gekennzeichnet, dass** das Werkzeug (14) an einem freien Ende des Werkzeuges zumindest eine Abdachschneidkante (25', 26'), zumindest eine axial zu der zumindest einen Abdachschneidkante (25', 26') versetzt angeordnete Hinterlegungsschneidkante (28') und zumindest eine axial zu den Abdachschneidkanten (25', 26') und der Hinterlegungsschneidkante (28') versetzt angeordnete Rastnutschneidkanten-Anordnung (29', 29") aufweist;
- wobei nacheinander mit der zumindest einen Abdachschneidkante (25', 26') zumindest alle linken Abdachungen und nachfolgend alle rechten Abdachungen, mit der Hinterlegungsschneidkante (28') die Hinterlegungen und mit der Rastnutschneidkanten-Anordnung (29') die Rastnuten gefertigt werden.

2. Vorrichtung zur Durchführung des Verfahrens gemäß Anspruch 1, mit einer ersten Maschineneinheit (1) aufweisend die erste Werkstückspindel (5), die erste Werkzeugspindel (3), die zweite Werkzeugspindel (13) und eine Steuereinrichtung (20),
**dadurch gekennzeichnet, dass** die erste Werkzeugspindel (3) mit einem Wälzschälwerkzeug (4) bestückt ist und die zweite Werkzeugspindel (13) mit einem Werkzeug (14) bestückt ist, das an einem freien Ende ein oder mehrere Abdachschneidkanten (25', 26') zum Erzeugen der linken und rechten Abdachungen an den Stirnseiten der Zähne des Werkrades (6), zumindest eine axial zu den Abdachschneidkanten (25', 26') versetzt angeordnete Hinterlegungsschneidkante (28') zum Erzeugen der Hinterlegungen in den Zahnflanken der Zähne des Werkrades (6), und zumindest eine axial zu den Abdachschneidkanten (25', 26') und der Hinterlegungsschneidkante (28') versetzt angeordnete Rastnutschneidkanten-Anordnung (29', 29") zum Erzeugen von Rastnuten in den Zahnflanken der Zähne des Werkrades (6) aufweist, wobei die Steuereinrichtung (20) zur Steuerung der Antriebe der Werkzeug- und Werkstückspindeln (3, 13; 5, 15) und zu deren räumlichen Verlagerung so eingerichtet ist, dass in einem ersten Bearbeitungsschritt ein unverzahntes Werkrad (6) mittels des von der ersten Werkzeugspindel (3) drehangetriebenen Wälzschälwerkzeug (4) im Wälzschälverfahren verzahnt wird und in einem zweiten Bearbeitungsschritt die Abdachungen, Hinterlegungen und Rastnuten von den von der zweiten Werkzeugspindel getragenen Werkzeug (14) ohne Umspannen des Werkstücks während des zweiten Bearbeitungsschritts nacheinander gefertigt werden.

3. Von einer Werkzeugspindel um eine Drehachse drehantreibbares Werkzeug (14) zur spanenden Bearbeitung verzahnter Werkräder (6) mit an einem freien Ende des Werkzeuges angeordneten einen oder mehreren Abdachschneidkanten (25', 26') zum Erzeugen linker und rechter Abdachungen an den Stirnseiten der Zähne des Werkrades (6), **dadurch gekennzeichnet, dass** das Werkzeug (14) zumindest eine axial zu den Abdachschneidkanten (25', 26') versetzt angeordnete Hinterlegungsschneidkante (28') zum Erzeugen von Hinterlegungen in den Zahnflanken der Zähne des Werkrades (6) und zumindest eine axial zu den Abdachschneidkanten (25', 26') und der Hinterlegungsschneidkante (28') versetzt angeordnete Rastnutschneidkanten-Anordnung (29', 29") zum Erzeugen von Rastnuten in den Zahnflanken der Zähne des Werkrades (6) aufweist.

4. Verfahren nach Anspruch 1 oder Vorrichtung nach Anspruch 2 oder Werkzeug nach Anspruch 3, **dadurch gekennzeichnet, dass** die Abdachschneidkanten (25', 26') von - bezogen auf die Drehachse voneinander wegweisenden Wendeschneidplatten (25, 26) gebildet sind und sich insbesondere im Wesentlichen in einer Drehebene erstrecken.

5. Verfahren oder Vorrichtung oder Werkzeug nach einem der vorhergehenden Ansprüche, **dadurch gekennzeichnet, dass** die Hinterlegungsschneidkanten (28') von Zahnkanten von Schneidzähnen (28) eines verzahnten Schneidrades (27) ausgebildet sind.

6. Verfahren oder Vorrichtung oder Werkzeug nach einem der vorhergehenden Ansprüche, **dadurch gekennzeichnet, dass** die Rastnutschneidkanten-Anordnung (29', 29") zumindest eine Wendeschneidplatte (29) aufweist mit zwei in einem radial äußeren Punkt auslaufenden Schneidkanten, welcher Punkt einen größeren Abstand zur Drehachse (21) aufweist, als die Hinterlegungsschneidkanten (28') und insbesondere als die Zahnköpfe der Schneidzähne (28) des verzahnten Schneidrades (27) zur Erzeugung der Hinterlegungen.

7. Verfahren oder Vorrichtung nach einem der vorhergehenden Ansprüche, **gekennzeichnet durch** eine Übergabeeinrichtung (12), mit der das verzahnte Werkrad (6) an eine zweite Werkstückspindel (15) übergeben wird, die mit dem zweiten Werkzeug (14) zusammenwirkt.

8. Verfahren oder Vorrichtung nach einem der vorhergehenden Ansprüche, **dadurch gekennzeichnet, dass** bezogen auf ein rechtwinkliges X-Y-Z-Koordinatensystem die beiden Achsen der beiden Werkstückspindeln (5, 15) sich in Z-Richtung erstrecken und relativ gegenüber der ersten und/oder zweiten Werkzeugspindel lediglich in der X-Y-Ebene und in Z-Richtung verlagerbar sind.

9. Verfahren oder Vorrichtung nach einem der vorhergehenden Ansprüche, **dadurch gekennzeichnet, dass** erste Werkzeugspindel (3) und die zweite Werkzeugspindel (13) lediglich um eine quer zur Z-Achse verlaufende Schwenkachse (8,18) schwenkverlagerbar ist, wobei die zweite Werkzeugspindel (13) beim Abdachen von einer ersten Schwenkposition, in der die linken Abdachungen gefertigt werden, in eine zweite Schwenkstellung gebracht wird, in der die rechten Abdachungen gefertigt werden und in einer dritten Schwenkstellung, in der die zweiten Werkzeugspindel (13) sich in der Z-Richtung erstreckt, die Hinterlegungen und/oder die Rastnuten erzeugt werden.

10. Verfahren oder Vorrichtung nach einem der vorhergehenden Ansprüche, **dadurch gekennzeichnet, dass** in einer einzigen Maschineneinheit in einer ersten Aufspannstellung vordere Abdachungen, die Rastnuten und vordere Hinterlegungen in das verzahnte Werkrad (6) eingebracht werden und dass nach einem Wenden des Werkrades (6) um 180° in einer zweiten Aufspannstellung mit denselben Abdachschneidkanten (25', 26') rückwärtige Abdachungen und mit derselben Rastnutschneidkanten-Anordnung (29', 29") rückwärtige Hinterlegungen in das Werkrad (6) eingebracht werden.

11. Verfahren nach Anspruch 1, bei dem eine Vorrichtung nach Anspruch 2 verwendet wird, wobei in der ersten Maschineneinheit (1) mit dem Wälzschälwerkzeug (4) eine Grobverzahnung erzeugt wird und in einer der ersten Maschineneinheit (1) unmittelbar benachbarten zweiten Maschineneinheit (2) eine Schlichtbearbeitung der Zähne des Werkrades (6) mit einem zweiten Wälzschälwerkzeug durchgeführt wird, wobei eine erste Werkzeugspindel (3) der zweiten Maschineneinheit (2) mit einem Wälzschälwerkzeug (4) bestückt ist und eine zweite Werkzeugspindel (13) der zweiten Maschineneinheit (2) mit einem Werkzeug (14; 24) te bestückt ist, das an einem freien Ende ein oder mehrere Abdachschneidkanten (25', 26') zum Erzeugen der linken und rechten Abdachungen an den Stirnseiten der Zähne des Werkrades (6) und zumindest eine axial zu den Abdachschneidkanten (25', 26') versetzt angeordnete Hinterlegungsschneidkante (28'; 39') zum Erzeugen von Hinterlegungen in den Zahnflanken der Zähne des Werkrades (6) aufweist.

12. Vorrichtung nach Anspruch 2, wobei in der ersten Maschineneinheit (1) mit dem Wälzschälwerkzeug (4) eine Grobverzahnung erzeugt wird und in einer der ersten Maschineneinheit (1) unmittelbar benachbarten zweiten Maschineneinheit (2) eine Schlichtbearbeitung der Zähne des Werkrades (6) mit einem zweiten Wälzschälwerkzeug durchgeführt wird, wobei eine erste Werkzeugspindel (3) der zweiten Maschineneinheit (2) mit einem Wälzschälwerkzeug (4) bestückt ist und eine zweite Werkzeugspindel (13) der zweiten Maschineneinheit (2) mit einem Werkzeug (14; 24) bestückt ist, das an einem freien Ende eine oder mehrere Abdachschneidkanten (25' 26') zum Erzeugen der linken und rechten Abdachungen an den Stirnseiten der Zähne des Werkrades (6) und zumindest eine axial zu den Abdachschneidkanten (25', 26') versetzt angeordnete Hinterlegungsschneidkante (28'; 39') zum Erzeugen von Hinterlegungen in den Zahnflanken der Zähne des Werkrades (6) aufweist.

13. Verfahren nach Anspruch 11 oder Vorrichtung nach Anspruch 12, **dadurch gekennzeichnet, dass** in der ersten Maschineneinheit (1) vordere Abdachungen, vordere Hinterlegungen und die Rastnuten gefertigt werden und dass in der zweiten Maschineneinheit (2) rückwärtige Abdachungen und rückwärtige Hinterlegungen gefertigt werden.

## Claims

1. Method for machining work wheels (6,16) with the following steps:
- Gripping of a work wheel (6) and clamping of the work wheel (6) on a first workpiece spindle (5);
- Toothing of the non-toothed work wheel (6) by means of a gear skiving tool (4) driven in rotation by a first tool spindle (3) in the gear skiving process; and
- The production of slope surfaces on the end faces of the teeth of the gearwheel (6) as well as undercuts and detent grooves on the tooth flanks of the teeth of the work wheel (6) with a tool (14) driven in rotation by a second tool spindle (13), **characterised in that** the tool (14) has at least one slope cutting edge (25', 26'), at least one undercut cutting edge (28') arranged axially offset to the at least one slope cutting edge (25', 26') and at least one detent groove cutting edge arrangement (29', 29") arranged axially offset to the slope cutting edges (25', 26') and the undercut cutting edge (28');
- whereby at least all the left-hand slopes and subsequently all the right-hand slope are produced in succession with the at least one slope cutting edge (25', 26'), the undercut are produced with the undercut cutting edge (28') and the detent grooves are produced with the detent groove cutting edge arrangement (29').

2. Apparatus for carrying out the method according to claim 1, having a first machine unit (1) comprising the first workpiece spindle (5), the first tool spindle (3), the second tool spindle (13) and a control device (20), **characterised in that in that** the first tool spindle (3) is equipped with a gear skiving tool (4) and the second tool spindle (13) is equipped with a tool (14) which has one or more slope cutting edges (25', 26') at a free end for producing the left and right slopes on the end faces of the teeth of the work wheel (6), at least one undercut cutting edge (28') arranged axially offset to the slope cutting edges (25', 26') for producing the undercuts in the tooth flanks of the teeth of the work wheel (6), and at least one undercut cutting edge (28') arranged axially offset to the slope cutting edges (25', 26') and the undercut cutting edge (28'), and at least one detent groove cutting edge arrangement (29', 29") for producing detent grooves in the tooth flanks of the teeth of the work wheel (6), wherein the control device (20) for controlling the drives of the tool and workpiece spindles (3, 13; 5, 15) and for their spatial displacement such that, in a first machining step, an untoothed work wheel (6) is toothed by means of the gear skiving tool (4) driven in rotation by the first tool spindle (3) in the gear skiving process and, in a second machining step, the slopes, backings and detent grooves are produced successively by the tool (14) carried by the second tool spindle without reclamping the workpiece during the second machining step.

3. Tool (14), which can be driven in rotation about an axis of rotation by a tool spindle, for the machining of toothed work wheels (6) with one or more slope cutting edges (25', 26') arranged at a free end of the tool for producing left-hand and right-hand slops on the end faces of the teeth of the work wheel (6), **characterised in that** the tool (14) has at least one undercut cutting edge (28') arranged axially offset relative to the slop cutting edges (25', 26') for producing undercuts in the tooth flanks of the teeth of the work wheel (6) and at least one detent groove cutting edge arrangement (29', 29") for producing detent grooves in the tooth flanks of the teeth of the work wheel (6), which is arranged axially offset relative to the slopes cutting edges (25', 26') and the undercuts cutting edge (28').

4. Method according to claim 1 or device according to claim 2 or tool according to claim 3, **characterised in that** the slope cutting edges (25', 26') are formed by indexable inserts (25, 26) pointing away from each other in relation to the axis of rotation and in particular extend essentially in a plane of rotation.

5. Method or device or tool according to one of the preceding claims, **characterised in that** the undercut cutting edges (28') are formed by tooth edges of cutting teeth (28) of a toothed cutting wheel (27).

6. Method or device or tool according to one of the preceding claims, **characterised in that** the indexable cutting edge arrangement (29', 29") has at least one indexable cutting insert (29) with two cutting edges ending at a radially outer point, which point is at a greater distance from the axis of rotation (21) than the undercut cutting edges (28') and in particular than the tooth heads of the cutting teeth (28) of the toothed cutting wheel (27) for producing the undercuts.

7. Method or device according to one of the preceding claims, **characterised by** a transfer device (12), with which the toothed work wheel (6) is transferred to a second workpiece spindle (15), which cooperates with the second tool (14).

8. Method or device according to one of the preceding claims, **characterised in that**, in relation to a rectangular X-Y-Z coordinate system, the two axes of the two workpiece spindles (5, 15) extend in the Z direction and can be displaced relative to the first and/or second tool spindle only in the X-Y plane and in the Z direction.

9. Method or device according to one of the preceding claims, **characterised in that** the first tool spindle (3) and the second tool spindle (13) can only be pivotally displaced about a pivot axis (8, 18) extending transversely to the Z-axis, wherein the second tool spindle (13) is moved from a first pivotal position, in which the left-hand slopes are produced, into a second pivotal position, in which the right-hand slopes are produced, and into a third pivotal position, in which the second tool spindle (13) extends in the Z direction, the undercuts and/or the detent grooves are produced.

10. Method or device according to one of the preceding claims, **characterised in that** in a single machine unit, in a first clamping position, front slopes the detent grooves and front undercuts are machined into the toothed work wheel (6) in a single machine unit and **in that**, after turning the work wheel (6) through 180° in a second clamping position, rear slopes are machined into the work wheel (6) with the same slopes cutting edges (25', 26') and rear undercuts are machined into the work wheel (6) with the same detent groove cutting edge arrangement (29', 29").

11. Method according to claim 1, in which a device according to claim 2 is used, wherein a coarse toothing is produced in the first machine unit (1) with the gear skiving tool (4) and in a second machine unit (2) immediately neighbouring the first machine unit (1) a finishing machining of the teeth of the work wheel (6) is carried out with a second gear skiving tool, wherein a first tool spindle (3) of the second machine unit (2) is equipped with a gear skiving tool (4) and a second tool spindle (13) of the second machine unit (2) is equipped with a tool (14; 24), which has at a free end one or more slope cutting edges (25', 26') for producing the left and right slopes on the end faces of the teeth of the work wheel (6) and at least one undercut cutting edge (28'; 39'), which is arranged axially offset relative to the slope cutting edges (25', 26'), for producing undercuts in the tooth flanks of the teeth of the work wheel (6).

12. Device according to claim 2, wherein in the first machine unit (1) a coarse toothing is produced with the gear skiving tool (4) and in a second machine unit (2) immediately neighbouring the first machine unit (1) a finishing machining of the teeth of the work wheel (6) is carried out with a second gear skiving tool, wherein a first tool spindle (3) of the second machine unit (2) is equipped with a gear skiving tool (4) and a second tool spindle (13) of the second machine unit (2) is equipped with a tool (14; 24) which has at a free end one or more gear cutting edges (25', 26') for producing the left and right slopes on the end faces of the teeth of the work wheel (6) and at least one undercut cutting edge (28'; 39') arranged axially offset with respect to the slope cutting edges (25', 26') for producing undercuts in the tooth flanks of the teeth of the work wheel (6).

13. Method according to claim 11 or device according to claim 12, **characterised in that** front slopes, front undercuts and the detant grooves are produced in the first machine unit (1) and that rear slopes and rear undercuts are produced in the second machine unit (2).

## Revendications

1. Procédé d'usinage de roues à tailler (6, 16) avec les étapes suivantes :
- préhension de la roue à tailler (6) et serrage de la roue à tailler (6) sur une première broche porte-pièce (5),
- taillage de la roue à tailler non dentée (6) au moyen d'un premier outil à tailler par développante (4) entraîné en rotation par une première broche porte-outil (3) dans un procédé de taillage par développante, et
- production de biseaux sur les faces avant des dents de la roue à tailler (6) ainsi que de contre-dépouilles et rainures d'encliquetage sur les flancs de dent de dents de la roue à tailler (6) avec un outil (14) entraîné en rotation par une deuxième broche porte-outil (13),
***caractérisé en ce que*** l'outil (14) comporte à une extrémité libre de l'outil au moins une arête de coupe de biseautage (25', 26'), au moins une arrête de coupe de contre-dépouille (28') disposée axialement décalée par rapport à au moins une arête de coupe de biseautage (25', 26') et au moins un système d'arêtes de coupe de rainure d'encliquetage (29', 29") disposé axialement décalé par rapport aux arêtes de coupe de biseautage (25', 26') et à l'arête de coupe de contre-dépouille (28'),
- sachant qu'au moins tous les biseaux gauches et ensuite tous les biseaux droits sont fabriqués l'un après l'autre avec au moins une arête de coupe de biseautage (25', 26'), les contre-dépouilles sont fabriquées avec l'arête de coupe de contre-dépouille (28') et les rainures d'encliquetage avec le système d'arêtes de coupe de rainure d'encliquetage (29').

2. Dispositif pour exécuter le procédé selon la revendication 1, avec une première unité de machine (1) comportant la première broche porte-pièce (5), la première broche porte-outil (3), la deuxième broche porte-outil (13) et un système de commande (20),
**caractérisé en ce que** la première broche porte-outil (3) est équipée d'un outil à tailler par développante (4) et la deuxième broche porte-outil (13) est équipée d'un outil (14), qui comporte à une extrémité libre une ou plusieurs arêtes de coupe de biseautage (25', 26') pour produire des biseaux gauches et droits sur les faces avant des dents de la roue à tailler (6), au moins une arête de coupe de contre-dépouille (28') disposée axialement décalée par rapport aux arêtes de coupe de biseautage (25', 26') pour produire des contre-dépouilles dans les flancs de dent des dents de la roue à tailler (6) et au moins un système d'arêtes de coupe de rainure d'encliquetage (29', 29") disposé axialement décalé par rapport aux arêtes de coupe de biseautage (25', 26') et à l'arête de coupe de contre-dépouille (28') pour produire des rainures d'encliquetage dans les flancs de dent des dents de la roue à tailler (6), sachant que le système de commande (20) est agencé pour commander les entraînements des broches porte-outil et porte-pièce (3, 13, 5, 15) et pour la transposition dans l'espace de celles-ci de telle manière que dans une première phase d'usinage une roue à tailler non dentée (6) est taillée au moyen de l'outil à tailler par développante (4) entraîné en rotation par la première broche porte-outil (3) dans le procédé de taillage par développante et dans une deuxième phase d'usinage les biseaux, contre-dépouilles et rainures d'encliquetage les uns derrière les autres par l'outil (14) porté par la deuxième broche porte-outil sans remontage de la pièce pendant la deuxième phase d'usinage.

3. Outil (14) entraîné en rotation autour d'un axe de rotation par une broche porte-outil pour l'usinage par enlèvement de copeaux de roues à tailler (6) dentées avec une ou plusieurs arêtes de coupe de biseautage (25', 26') disposées à une extrémité libre de l'outil pour produire des biseaux gauches et droits sur les faces avant des dents de la roue à tailler (6), **caractérisé en ce que** l'outil (14) comporte au moins une arête de coupe de contre-dépouille (28') disposée axialement décalée par rapport aux arêtes de coupe de biseautage (25', 26') pour produire des contre-dépouilles dans les flancs de dent des dents de la roue à tailler (6) et au moins un système d'arêtes de coupe de rainures d'encliquetage (29', 29") disposé axialement décalé par rapport aux arêtes de coupe de biseautage (25', 26') et à l'arête de coupe de contre-dépouille (28') pour produire des rainures d'encliquetage dans les flancs de dent des dents de la roue à tailler (6).

4. Procédé selon la revendication 1 ou dispositif selon la revendication 2 ou outil selon la revendication 3, **caractérisé en ce que** les arêtes de coupe de biseautage (25', 26') sont formées de plaquettes de coupe amovibles (25, 26) s'écartant l'une de l'autre en référence à l'axe de rotation et s'étendent en particulier pour l'essentiel dans un plan de rotation.

5. Procédé ou dispositif ou outil selon l'une quelconque des revendications précédentes, **caractérisé en ce que** les arêtes de coupe de contre-dépouille (28') sont constituées d'arêtes de dent des dents de coupe (28) d'une roue de coupe dentée (27).

6. Procédé ou dispositif ou outil selon l'une quelconque des revendications précédentes, **caractérisé en ce que** le système d'arêtes de coupe de rainure d'encliquetage (29', 29") comporte au moins une plaquette de coupe amovible (29) avec deux arêtes de coupe se terminant dans un point radialement extérieur, lequel point comporte une distance plus grande par rapport à l'axe de rotation (21) que les arêtes de coupe de contre-dépouille (28') et en particulier que les têtes de dent des dents de coupe (28) de la roue de coupe dentée (27) pour produire les contre-dépouilles.

7. Procédé ou dispositif selon l'une quelconque des revendications précédentes, **caractérisé par** un système de transfert (12) avec lequel la roue à tailler dentée (6) est transférée à une deuxième broche porte-pièce (15), qui coopère avec le deuxième outil (14).

8. Procédé ou dispositif selon l'une quelconque des revendications précédentes, **caractérisé en ce qu'**en se référant à un système de coordonnées X-Y-Z à angle droit, les deux axes des deux broches porte-pièce (5, 15) s'étendent en direction Z et peuvent être déplacées uniquement dans le plan X-Y et en direction Z par rapport à la première et/ou à la deuxième broche porte-outil.

9. Procédé ou dispositif selon l'une quelconque des revendications précédentes, **caractérisé en ce que** la première broche porte-outil (3) et la deuxième broche porte-outil (13) ne peuvent être déplacées en pivotement qu'autour d'un axe de pivotement (8, 18) passant transversalement à l'axe Z, sachant que la deuxième broche porte-outil (13) est mise lors du biseautage dans une première position de pivotement dans laquelle sont fabriqués les biseaux gauches, dans une deuxième position de pivotement dans laquelle sont fabriqués les biseaux droits et dans une troisième position de pivotement, dans laquelle la deuxième broche porte-outil (13) s'étend dans la direction Z, sont fabriquées les contre-dépouilles et/ou les rainures d'encliquetage.

10. Procédé ou dispositif selon l'une quelconque des revendications précédentes, **caractérisé en ce que** dans une unité de machine unique dans une première position de serrage, les biseaux avant, les rainures d'encliquetage et les contre-dépouilles avant sont pratiqués dans la roue à tailler dentée (6), et
**en ce qu'**après un inversement de la roue à tailler (6) de 180° dans une deuxième position de serrage avec les mêmes arêtes de coupe de biseautage (25', 26'), sont pratiqués dans la roue à tailler (6) les biseaux arrière et les contre-dépouilles arrière avec le même système d'arêtes de coupe de rainure d'encliquetage (29', 29").

11. Procédé selon la revendication 1, pour lequel on utilise un dispositif selon la revendication 2, sachant que dans la première unité de machine (1) une denture grossière est produite avec l'outil à tailler par développante (4) et dans une deuxième unité de machine (2) directement voisine de la première unité de machine (1), une finition des dents de la roue à tailler (6) est exécutée avec un deuxième outil à tailler par développante, sachant qu'une première broche porte-outil (3) de la deuxième unité de machine (2) est équipée d'un outil à tailler par développante (4) et une deuxième broche porte-outil (13) de la deuxième unité de machine (2) est équipée d'un outil (14, 24),
qui comporte à une extrémité libre une ou plusieurs arêtes de coupe de biseautage (25', 26') pour produire des biseaux gauches et droits sur les faces avant des dents de la roue à tailler (6) et au moins une arête de coupe de contre-dépouille (28', 39') disposée axialement décalée par rapport aux arêtes de coupe de biseautage (25', 26') pour produire des contre-dépouilles dans les flancs de dent des dents de la roue à tailler (6).

12. Dispositif selon la revendication 2, sachant que dans la première unité de machine (1) une denture grossière est produite avec l'outil à tailler par développante (4) et dans une deuxième unité de machine (2) directement voisine de la première unité de machine (1), une finition des dents de la roue à tailler (6) est exécutée avec un deuxième outil à tailler par développante, sachant qu'une première broche porte-outil (3) de la deuxième unité de machine (2) est équipée d'un outil à tailler par développante (4) et une deuxième broche porte-outil (13) de la deuxième unité de machine (2) est équipée d'un outil (14, 24),
qui comporte à une extrémité libre une ou plusieurs arêtes de coupe de biseautage (25', 26') pour produire des biseaux gauches et droits sur les faces avant des dents de la roue à tailler (6) et au moins une arête de coupe de contre-dépouille (28', 39') disposée axialement décalée par rapport aux arêtes de coupe de biseautage (25', 26') pour produire des contre-dépouilles dans les flancs de dent des dents de la roue à tailler (6).

13. Procédé selon la revendication 11 ou dispositif selon la revendication 12, **caractérisé en ce que** dans la première unité de machine (1) sont fabriqués les biseaux avant, les contre-dépouilles avant et les rainures d'encliquetage et **en ce que** dans la deuxième unité de machine (2) sont fabriquées les biseaux arrière et les contre-dépouilles arrière.
